# EUROPEAN PATENT SPECIFICATION

(11) **EP 3 358 154 B1**
(45) Date of publication and mention of the grant of the patent: **27.05.2020**
(21) Application number: 18154990.8
(22) Date of filing: 02.02.2018
(51) Int. Cl.: F01D 25/24, F01D 9/02

(54) **CASE FLANGE WITH STRESS REDUCING FEATURES**
GEHÄUSEFLANSCHES MIT BELASTUNGSREDUZIERENDEN MERKMALEN
BRIDE DE BOÎTIER PRÉSENTANT DES CARACTÉRISTIQUES DE RÉDUCTION DE CONTRAINTE

(30) Priority: 03.02.2017 US 201715423731
(43) Date of publication of application: 08.08.2018
(73) Proprietor: United Technologies Corporation, Farmington, CT 06032 (US)
(72) Inventor: DALE, Timothy, Manchester, CT 06447 (US)
(74) Representative: Dehns

(56) References cited:
- EP-A1- 1 607 582
- EP-A1- 1 707 758
- EP-A1- 3 103 972
- FR-A1- 2 914 707
- JP-A- H11 218 277

## Description

### BACKGROUND

The present disclosure relates to flanges for gas turbine engines, and more particularly to flanges with slots and other stress reducing features for gas turbine engines.

Flanges for gas turbine engines can be utilized to attach cases of various engine components. During operation, flanges may experience stresses due to thermal and mechanical loads that may cause cracking and other failure.

Accordingly, it is desirable to provide flanges with stress reducing features.

JP H-11 218277 A discloses a flange joint for piping. EP 3103972 A1 and EP 1707758 A1 disclose flanges related to gas turbine engines.

### BRIEF SUMMARY

Viewed from one aspect the present invention provides a flange for a gas turbine engine case according to claim 1.

According to an embodiment, a flange for use with a case includes a flange body, a fastener hole formed through the flange body, the fastener hole configured to receive a fastener, a radial slot formed through the flange body, wherein the radial slot is adjacent to the fastener hole, the radial slot defines a first portion of the flange body and a second portion of the flange body, and the radial slot prevents transfer of a hoop stress between the first portion and the second portion.

The flange includes a plurality of fastener holes. Each of a plurality of slots corresponds to one of the plurality of fastener holes. The slot extends to the fastener hole and extends to an outer edge of the flange body. A scallop feature is disposed on an outer edge of the flange body.

In addition to one or more of the features described above, or as an alternative, further embodiments could include that the hoop stress is induced by a thermal gradient.

In addition to one or more of the features described above, or as an alternative, further embodiments could include that the thermal gradient extends radially from an inner edge of the flange body to an outer edge of the flange body.

In addition to one or more of the features described above, or as an alternative, further embodiments could include that the radial slot allows a first thermal expansion of the first portion and a second thermal expansion of the second portion.

In addition to one or more of the features described above, or as an alternative, further embodiments could include that the radial slot allows a first movement of the first portion and a second movement of the second portion.

In addition to one or more of the features described above, or as an alternative, further embodiments could include that the fastener hole receives a flange bolt.

In addition to one or more of the features described above, or as an alternative, further embodiments could include that the plurality of fastener holes are circumferentially disposed on the flange body.

In addition to one or more of the features described above, or as an alternative, further embodiments could include that the flange is attached to the case.

In addition to one or more of the features described above, or as an alternative, further embodiments could include that the flange is configured to be coupled to a second case.

In addition to one or more of the features described above, or as an alternative, further embodiments could include that the flange is configured to be coupled to a second flange.

In addition to one or more of the features described above, or as an alternative, further embodiments could include that the case is at least one of a high pressure turbine case and an outer diffuser case.

According to an embodiment, a gas turbine as set out in claim 12 is provided.

Other aspects, features, and techniques of the embodiments will become more apparent from the following description taken in conjunction with the drawings.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
Fig. 1 is a schematic, partial cross-sectional view of a turbomachine in accordance with this disclosure;
Fig. 2 is a detail view of a flange assembly for use with the turbomachine of Fig. 1;
Fig. 3A is a partial plan view of a flange body for use with the flange assembly of Fig. 2 described for explanatory purposes; and
Fig. 3B is a partial plan view of a flange body in accordance with an exemplary embodiment of the invention, for use with the flange assembly of Fig. 2.

### DETAILED DESCRIPTION

Embodiments provide a flange with stress reducing features. The slots of the flange can reduce stress induced by a thermal gradient created during operation to prevent cracking and improve life of the flange.

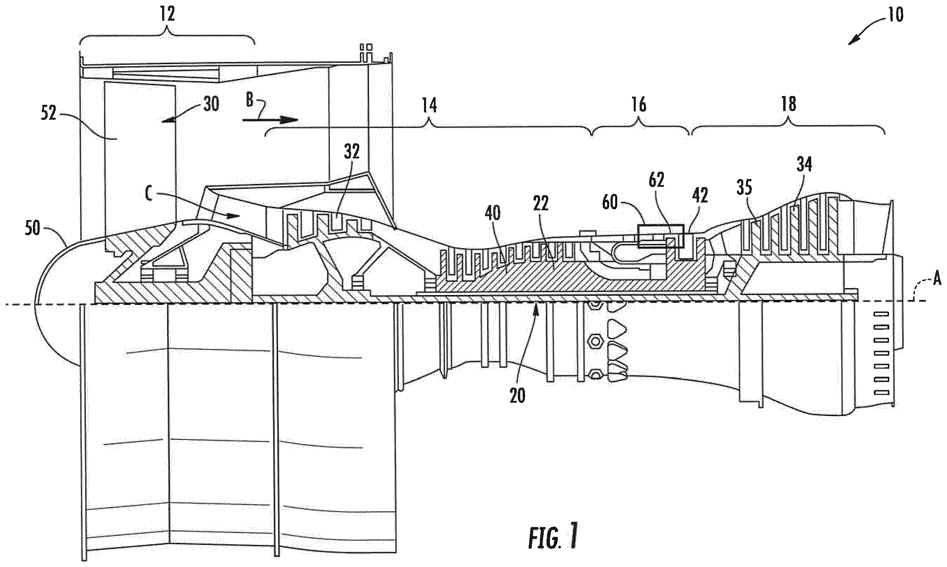

Referring to FIG. 1 a schematic representation of a gas turbine engine 10 is shown. The gas turbine engine includes a fan section 12, a compressor section 14, a combustor section 16, and a turbine section 18 disposed about a longitudinal axis A. The fan section 12 drives air along a bypass flow path B that may bypass the compressor section 14, the combustor section 16, and the turbine section 18. The compressor section 14 draws air in along a core flow path C where air is compressed by the compressor section 14 and is provided to or communicated to the combustor section 16. The compressed air is heated by the combustor section 16 to generate a high pressure exhaust gas stream that expands through the turbine section 18. The turbine section 18 extracts energy from the high pressure exhaust gas stream to drive the fan section 12 and the compressor section 14.

The gas turbine engine 10 further includes a low-speed spool 20 and a high-speed spool 22 that are configured to rotate the fan section 12, the compressor section 14, and the turbine section 18 about the longitudinal axis A. The low-speed spool 20 may connect a fan 30 of the fan section 12 and a low-pressure compressor portion 32 of the compressor section 14 to a low-pressure turbine portion 34 of the turbine section 18. In the illustrated embodiment, the turbine section 18 can include a rotating disc assembly 35. The high-speed spool 22 may connect a high pressure compressor portion 40 of the compressor section 14 and a high pressure turbine portion 42 of the turbine section 18. The fan 30 includes a fan rotor or fan hub 50 that carries a fan blade 52. The fan blade 52 radially extends from the fan hub 50.

In the illustrated embodiment, components of the gas turbine engine 10, including, but not limited to the fan section 12, the compressor section 14, the combustor section 16, and the turbine section 18 can be assembled together with bolted flanges. In certain embodiments, component cases can include flanges to allow connection and assembly thereof. In the illustrated embodiment, flanges 62 are shown in a flange area 60. In the illustrated embodiment, flanges 62 provide a connection between the combustor section 16 and the turbine section 18 of the gas turbine engine 10.

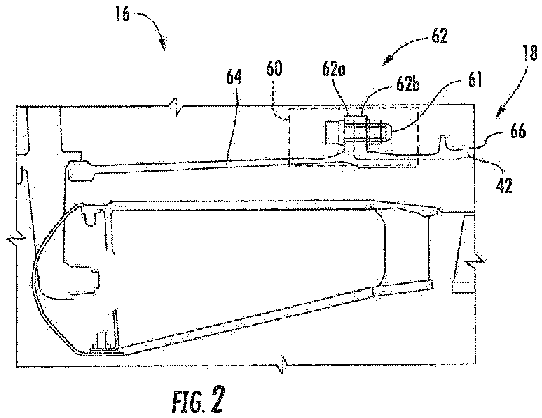

Referring to FIG. 2 a detailed view of the flange area 60 is shown. In the illustrated embodiment, flanges 62 can be utilized to provide mating surfaces to connect a component case to another component. In the illustrated embodiment, flanges 62 include a first flange 62a and a second flange 62b. Flange bolts 61 can be utilized to connect the first flange 62a and the second flange 62b. In the illustrated embodiment, flanges 62 are utilized to assemble an outer diffuser case 64 with the high pressure turbine case 66. During operation, heat can be transferred from the component and component case to the flanges 62 creating a thermal gradient across the flanges 62. In certain applications, the thermal gradient can create thermal stress in certain portions of the flanges 62. In the illustrated embodiment, the flanges 62a, 62b include stress reducing features to minimize thermal stress due to a thermal gradient. The stress reducing features described herein can be utilized for any suitable static flanges.

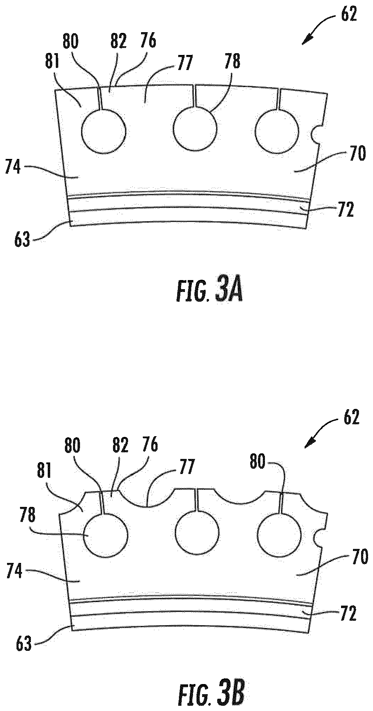

Referring to FIG. 3A, a flange 62 is shown for explanatory purposes. In the illustrated arrangement, a portion of the flange body 70 is shown. In the illustrated arrangement, the flange 62 includes a flange body 70, an inner portion 74, an outer portion 76, bolt holes 78, and slots 80. In the illustrated arrangement, the slots 80 are stress reducing features that minimize thermal stress introduced by thermal gradients across the flange body 70.

In the illustrated arrangement, the flange body 70 can be formed from any suitable material and thickness. In the illustrated arrangement, the flange body 70 is generally circular or hoop shaped. Bolt holes 78 are formed through the flange body 70. In the illustrated arrangementt, a plurality of bolt holes 78 can be utilized to provide a suitable coupling force needed for operation and assembly. The bolt holes 78 can be disposed in a circular arrangement around the flange body 70. In the illustrated arrangement, the flange body 70 is associated with, affixed to, or otherwise coupled to the case body 63. In certain arrangements, the flange body 70 is integrally formed with the case body 63. The case body 63 can be any suitable component case, including, but not limited to the outer diffuser case 64, the high pressure turbine case 66, etc.

In the illustrated arrangement, the flange body 70 includes an inner portion 74 radially disposed adjacent to the case body 63 and an outer portion 76 disposed away from the case body 63. In certain arrangements, the inner portion 74 includes a flange lip 72 that can allow for alignment of the flange body 70 with another flange or any other suitable component.

During operation, heat generating components, such as components in the combustor section 16 or the turbine section 18, etc., can transfer heat into the flange body 70. Due to the proximity of the inner portion 74 of the flange body 70 to heat generating components, the inner portion 74 can heat up more than the outer portion 76, creating a thermal gradient across the flange body 70. In the illustrated arrangement, the thermal gradient extends in a generally radially outward direction, with hotter temperatures near the inner portion 74 and cooler temperatures near the outer portion 76. In certain arrangements, the thermal gradient can be affected by the ambient airflow near the outer portion 76 of the flange body 70.

Due to the thermal gradient experienced across the flange body 70, various portions of the flange body 70 can experience different temperatures at a given time. Due to thermal expansion, various portions of the flange body 70 can expand at different rates in response to the difference in temperatures across the thermal gradient. Therefore, if portions of the flange body 70 are constrained during thermal expansion and contraction, the flange body 70 can experience thermal stress, including, but not limited to increased hoop stress. In the illustrated arrangement, the slots 80 can reduce thermal stress by preventing the buildup and transfer of hoop stress without compromising flange body 70 strength.

In the illustrated arrangement, the slots 80 are radially disposed slots that are formed through the flange body 70. In the illustrated arrangement, the flange body 70 can include a plurality of slots 80 to correspond to the bolt holes 78. The slots 80 can extend to the edge of the outer portion 76. In certain arrangements, the slots 80 can extend into the bolt holes 78.

In the illustrated arrangement, each slot 80 separates a portion of the flange body 70 to define a first portion 81 and a second portion 82 of the flange body 70. Multiple slots 80 can be utilized to define additional portions of the flange body 70. In the illustrated arrangement, the slot 80 allows the first portion 81 and the second portion 82 to not be constrained during thermal expansion and contraction. Therefore, the first portion 81 and the second portion 82 can expand at different rates in response to the experienced thermal gradient to allow for independent movement of the first portion 81 and the second portion 82. Accordingly, by separating the first portion 81 and the second portion 82 hoop stress is not transferred between the first portion 81 and the second portion 82 while maintaining the load carrying capabilities of the flange body 70. Advantageously, the flange body 70 can withstand greater temperature gradients without cracking due to thermal stress.

Referring to FIG. 3B an embodiment of the flange 62 in accordance with the invention is shown. In the illustrated embodiment, the flange body 70 includes scallop features 77 disposed on the outer portion 76. In certain applications, the scallop features 77 can further reduce thermal stress experienced by the flange body 70 by removing material from high hoop stress areas.

While the present disclosure has been described in detail in connection with only a limited number of embodiments, it should be readily understood that the present disclosure is not limited to such disclosed embodiments. Accordingly, the present disclosure is not to be seen as limited by the foregoing description, but is only limited by the scope of the appended claims.

## Claims

1. A flange (62) for a gas turbine engine case (64, 66), the flange (62) comprising:
a flange body (70);
a plurality of fastener holes (78) formed through the flange body (70), each of the plurality of fastener holes (78) configured to receive a fastener (61);
a plurality of radial slots (80) formed through the flange body (70), wherein each of the plurality of radial slots (80) is adjacent to and extends to one of the plurality of fastener holes (78) and extends to an outer edge of the flange body (70), each of the plurality of radial slots (80) defining a first portion (81) of the flange body and a second portion (82) of the flange body, and each of the plurality of radial slots (80) preventing a transfer of a hoop stress between a respective first portion (81) and a respective second portion (82); and
a scallop feature (77) defined between at least two of the plurality of radial slots (80).

2. The flange (62) of claim 1, wherein the hoop stress is induced by a thermal gradient.

3. The flange (62) of claim 2, wherein the thermal gradient extends radially from an inner edge of the flange body (70) to an outer edge of the flange body (70).

4. The flange (62) of claim 1, 2 or 3, wherein each of the plurality of radial slots (80) allows a first thermal expansion of the respective first portion (81) and a second thermal expansion of the respective second portion (82).

5. The flange (62) of any preceding claim, wherein each of the plurality of radial slots (80) allows a first movement of the respective first portion (81) and a second movement of the respective second portion (82).

6. The flange (62) of any preceding claim, wherein each of the plurality of fastener holes (78) receives a flange bolt (61).

7. The flange (62) of any preceding claim, wherein each of the plurality of fastener holes (78) is circumferentially disposed on the flange body (70).

8. The flange (62) of claim 7, wherein each of the plurality of slots corresponds to one of the plurality of fastener holes (78).

9. The flange (62) of any preceding claim, wherein the flange (62) is attached to the case (64, 66) and/or wherein the case is at least one of a high pressure turbine case (66) and an outer diffuser case (64).

10. The flange (62) of any preceding claim, wherein the flange (62) is configured to be coupled to a second case (64, 66) and/or wherein the flange (62) is configured to be coupled to a second flange.

11. The flange (62) of claims 1 to 10, the case (64, 66) comprising: a case body (63), the flange (62) being coupled to the case body (63).

12. A gas turbine engine, comprising:
a case (64, 66); and
a flange (62) as claimed in any of the preceding claims, the flange (62) being coupled to the case (64, 66).

## Patentansprüche

1. Flansch (62) für ein Gasturbinentriebwerkgehäuse (64, 66), wobei der Flansch (62) Folgendes umfasst:
einen Flanschkörper (70);
eine Vielzahl von Befestigungslöchern (78), die durch den Flanschkörper (70) gebildet werden, wobei jedes von der Vielzahl von Befestigungslöchern (78) dazu konfiguriert ist, ein Befestigungselement (61) aufzunehmen;
eine Vielzahl von radialen Schlitzen (80), die durch den Flanschkörper (70) gebildet werden, wobei jeder von der Vielzahl von radialen Schlitzen (80) an eines von der Vielzahl von Befestigungslöchern (78) angrenzt und sich bis zu diesem erstreckt und sich bis zu einer äußeren Kante des Flanschkörpers (70) erstreckt, wobei jeder von der Vielzahl von radialen Schlitzen (80) einen ersten Abschnitt (81) des Flanschkörpers und einen zweiten Abschnitt (82) des Flanschkörpers definiert und jeder von der Vielzahl von radialen Schlitzen (80) eine Übertragung einer Ringspannung zwischen einem entsprechenden ersten Abschnitt (81) und einem entsprechenden zweiten Abschnitt (82) verhindert; und
ein Bogenmerkmal (77), das zwischen mindestens zwei von der Vielzahl von radialen Schlitzen (80) definiert ist.

2. Flansch (62) nach Anspruch 1, wobei die Ringspannung durch einen thermischen Gradienten induziert wird.

3. Flansch (62) nach Anspruch 2, wobei sich der thermische Gradient radial von einer inneren Kante des Flanschkörpers (70) zu einer äußeren Kante des Flanschkörpers (70) erstreckt.

4. Flansch (62) nach Anspruch 1, 2 oder 3, wobei jeder von der Vielzahl von radialen Schlitzen (80) eine erste thermale Ausdehnung des entsprechenden ersten Abschnitts (81) und eine zweite thermale Ausdehnung des entsprechenden zweiten Abschnitts (82) zulässt.

5. Flansch (62) nach einem der vorhergehenden Ansprüche, wobei jeder von der Vielzahl von radialen Schlitzen (80) eine erste Bewegung des entsprechenden ersten Abschnitts (81) und eine zweite Bewegung des entsprechenden zweiten Abschnitts (82) zulässt.

6. Flansch (62) nach einem der vorhergehenden Ansprüche, wobei jedes von der Vielzahl von Befestigungslöchern (78) eine Flanschschraube (61) aufnimmt.

7. Flansch (62) nach einem der vorhergehenden Ansprüche, wobei jedes von der Vielzahl von Befestigungslöchern (78) umlaufend an dem Flanschkörper (70) angeordnet ist.

8. Flansch (62) nach Anspruch 7, wobei jeder von der Vielzahl von Schlitzen mit einem von der Vielzahl von Befestigungslöchern (78) korrespondiert.

9. Flansch (62) nach einem der vorhergehenden Ansprüche, wobei der Flansch (62) an dem Gehäuse (64, 66) angebracht ist und/oder wobei das Gehäuse mindestens eines von einem Hochdruckturbinengehäuse (66) und einem äußeren Diffusorgehäuse (64) ist.

10. Flansch (62) nach einem der vorhergehenden Ansprüche, wobei der Flansch (62) dazu konfiguriert ist, an ein zweites Gehäuse (64, 66) gekoppelt zu werden und/oder wobei der Flansch (62) dazu konfiguriert ist, an einen zweiten Flansch gekoppelt zu werden.

11. Flansch (62) nach einem der Ansprüche 1 bis 10, wobei das Gehäuse (64, 66) Folgendes umfasst:
einen Gehäusekörper (63), wobei der Flansch (62) an den Gehäusekörper (63) gekoppelt ist.

12. Gasturbinentriebwerk, Folgendes umfassend:
ein Gehäuse (64, 66); und
einen Flansch (62) nach einem der vorhergehenden Ansprüche, wobei der Flansch (62) an das Gehäuse (64, 66) gekoppelt ist.

## Revendications

1. Bride (62) pour un boîtier de moteur à turbine à gaz (64, 66), la bride (62) comprenant :
un corps de bride (70) ;
une pluralité de trous de fixation (78) formés à travers le corps de bride (70), chacun de la pluralité de trous de fixation (78) étant configuré pour recevoir une fixation (61) ;
une pluralité de fentes radiales (80) formées à travers le corps de bride (70), dans laquelle chacune de la pluralité de fentes radiales (80) est adjacente à et s'étend jusqu'à l'un de la pluralité de trous de fixation (78) et s'étend jusqu'à un bord extérieur du corps de bride (70), chacune de la pluralité de fentes radiales (80) définissant une première partie (81) du corps de bride et une seconde partie (82) du corps de bride, et chacune de la pluralité de fentes radiales (80) empêchant un transfert d'une contrainte annulaire entre une première partie respective (81) et une seconde partie respective (82) ; et
un élément d'échancrure (77) défini entre au moins deux de la pluralité de fentes radiales (80).

2. Bride (62) selon la revendication 1, dans laquelle la contrainte annulaire est induite par un gradient thermique.

3. Bride (62) selon la revendication 2, dans laquelle le gradient thermique s'étend radialement à partir d'un bord intérieur du corps de bride (70) jusqu'à un bord extérieur du corps de bride (70).

4. Bride (62) selon la revendication 1, 2 ou 3, dans laquelle chacune de la pluralité de fentes radiales (80) permet une première dilatation thermique de la première partie respective (81) et une seconde dilatation thermique de la seconde partie respective (82).

5. Bride (62) selon une quelconque revendication précédente, dans laquelle chacune de la pluralité de fentes radiales (80) permet un premier mouvement de la première partie respective (81) et un second mouvement de la seconde partie respective (82) .

6. Bride (62) selon une quelconque revendication précédente, dans laquelle chacun de la pluralité de trous de fixation (78) reçoit un boulon de bride (61).

7. Bride (62) selon une quelconque revendication précédente, dans laquelle chacun de la pluralité de trous de fixation (78) est disposé de manière circonférentielle sur le corps de bride (70) .

8. Bride (62) selon la revendication 7, dans laquelle chacune de la pluralité de fentes correspond à l'un de la pluralité de trous de fixation (78).

9. Bride (62) selon une quelconque revendication précédente, dans laquelle la bride (62) est fixée au boîtier (64, 66) et/ou dans laquelle le boîtier est au moins l'un d'un boîtier de turbine haute pression (66) et d'un boîtier de diffuseur extérieur (64).

10. Bride (62) selon une quelconque revendication précédente, dans laquelle la bride (62) est configurée pour être couplée à un second boîtier (64, 66) et/ou dans laquelle la bride (62) est configurée pour être couplée à une seconde bride.

11. Bride (62) selon les revendications 1 à 10, le boîtier (64, 66) comprenant :
un corps de boîtier (63), la bride (62) étant couplée au corps de boîtier (63).

12. Moteur à turbine à gaz, comprenant :
un boîtier (64, 66) ; et
une bride (62) selon l'une quelconque des revendications précédentes, la bride (62) étant couplée au boîtier (64, 66).
